# EUROPEAN PATENT APPLICATION

(11) **EP 4 481 278 A1**
(43) Date of publication of application: **25.12.2024**
(21) Application number: 24181322.9
(22) Date of filing: 11.06.2024
(51) Int. Cl.: F24C 15/16, A21B 3/07, A47J 37/07, A47J 37/04, F24C 15/08

(54) **OVEN**

(30) Priority: 21.06.2023 TW 112206392 U
(71) Applicant: Hwang, Hsueh-Hsin, Taichung City 406037 (TW)
(72) Inventor: Hwang, Hsueh-Hsin, Taichung City 406037 (TW)
(74) Representative: V.O.

(57) **Abstract**

An oven includes an oven body (2), a driving unit (4), and a platform unit (5). The oven body (2) includes a foundation (21), and a surrounding wall (22) that is disposed on the foundation (21) and that surrounds and defines an inner space (221). The driving unit (4) includes a driving module (41) that is disposed on the foundation (21), and a driven component (42) that is to be driven by the driving module (41). The platform unit (5) is co-movably connected to the driven component (42) so as to move relative to the oven body (2) between a first position and a second position. The platform unit (5) in the first position is entirely within the inner space (221) and adjacent to the foundation (21). The platform unit (5) in the second position is partially outside of the inner space (221) and away from the foundation (21).

## Description

The disclosure relates to an oven, and more particularly to an oven with a liftable platform.

When baking pepper buns using a conventional oven, the raw pepper buns are attached to an inner wall surface of a surrounding wall of the conventional oven by hand, while a temperature inside the conventional oven is above 200 °C. Once the baking is complete, the baked pepper buns are taken out by hand or using utensils which is inconvenient and may cause unnecessary risks of burns to a baker.

Therefore, an object of the disclosure is to provide an oven that can alleviate at least one of the drawbacks of the prior art.

According to an aspect of the disclosure, there is provided an oven according to claim 1.

Other features and advantages of the disclosure will become apparent in the following detailed description of the embodiment(s) with reference to the accompanying drawings. It is noted that various features may not be drawn to scale.
Figure 1 is a sectional view illustrating an oven and a platform unit that is in a first position according to an embodiment of the disclosure.
Figure 2 is a cross-sectional top view illustrating the platform unit according to the embodiment of the disclosure.
Figure 3 is a perspective view illustrating a driving unit according to the embodiment of the disclosure.
Figure 4 is a sectional view illustrating the oven and the platform unit that is in a second position according to the embodiment of the disclosure.

Before the disclosure is described in greater detail, it should be noted that where considered appropriate, reference numerals or terminal portions of reference numerals have been repeated among the figures to indicate corresponding or analogous elements, which may optionally have similar characteristics.

It should be noted herein that for clarity of description, spatially relative terms such as "top," "bottom," "upper," "lower," "on," "above," "over," "downwardly," "upwardly" and the like may be used throughout the disclosure while making reference to the features as illustrated in the drawings. The features may be oriented differently (e.g., rotated 90 degrees or at other orientations) and the spatially relative terms used herein may be interpreted accordingly.

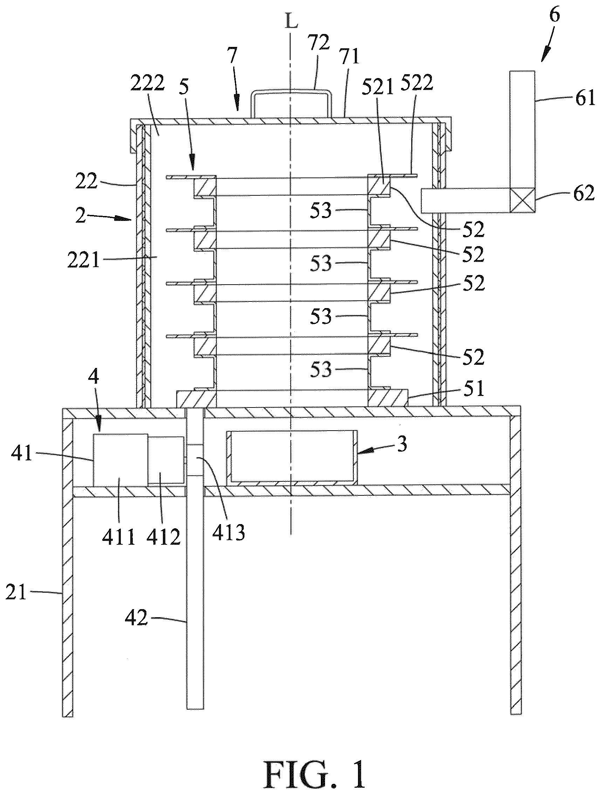

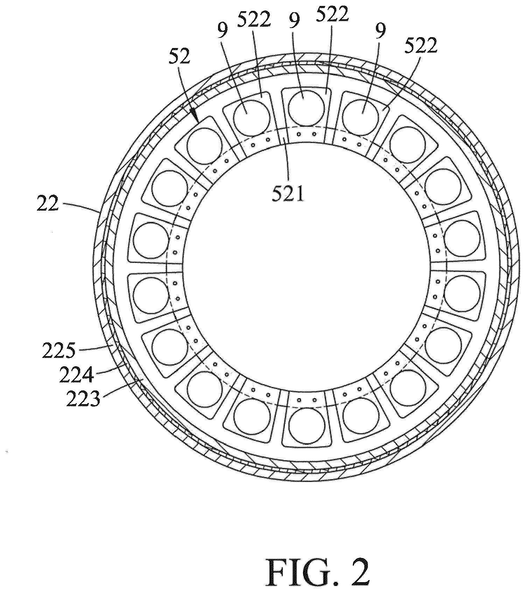

Referring to Figures 1 and 2, an oven according to an embodiment of the disclosure is adapted to bake a plurality of pepper buns 9. The oven includes an oven body 2, a heater 3, a driving unit 4, and a platform unit 5. The oven may optionally further include an exhaust unit 6 and a cover 7.

The oven body 2 includes a foundation 21, and a surrounding wall 22 disposed on the foundation 21. The surrounding wall 22 surrounds an axis (L), and defines an inner space 221 having an opening 222 that is opposite to the foundation 21 in a direction along the axis (L). The surrounding wall 22 includes an inner layer 223, an outer layer 225, an intermediate layer 224 that is sandwiched in between the inner layer 223 and the outer layer 225. Specifically, the inner layer 223, the intermediate layer 224 and the outer layer 255 are arranged in order from inside to outside. The inner layer 223 and the outer layer 225 are made of stainless steel, and the intermediate layer 224 is made of thermal insulation cotton (e.g., fiberglass wool, glass wool, aluminum foil wool, mineral wool, ceramic wool).

The heater 3 is removably disposed on the oven body 2 at a position on the axis (L) for heating the inner space 221. In this embodiment, the heater 3 is disposed on the foundation 21, but the heater 3 may also be disposed inside the inner space 221 in other embodiments depending on user needs. The heater 3 may be, for example, a brazier or a tubular heater.

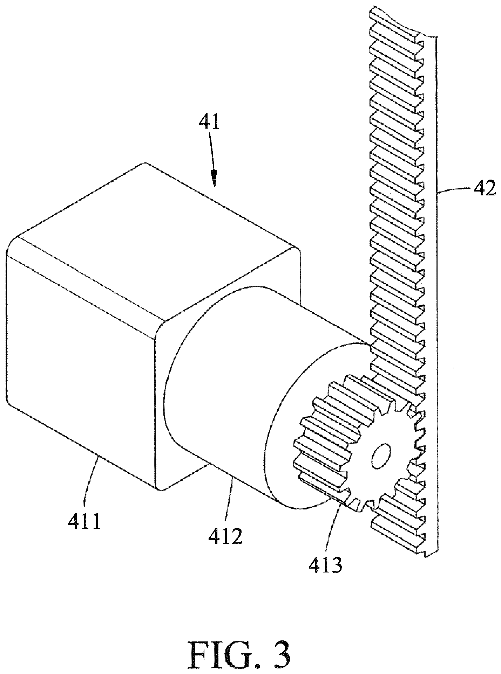

Referring further to Figure 3, the driving unit 4 includes a driving module 41 that is disposed on the foundation 21, and a driven component 42 that is to be driven by the driving module 41. The driving module 41 includes a motor 411 that is disposed on the foundation 21, a reduction drive 412 that is connected to and driven by the motor 411, and a gear 413 that is connected to and driven by the reduction drive 412. The reduction drive 412 is driven by the motor 411 to drive the gear 413 to rotate at a rotational speed that is slower than a rotational speed of the motor 411. In this embodiment, the driven component 42 is a rack that engages the gear 413 and that is configured to be driven by the gear 413 to move in an up-down direction (i.e., a direction parallel to the axis (L)).

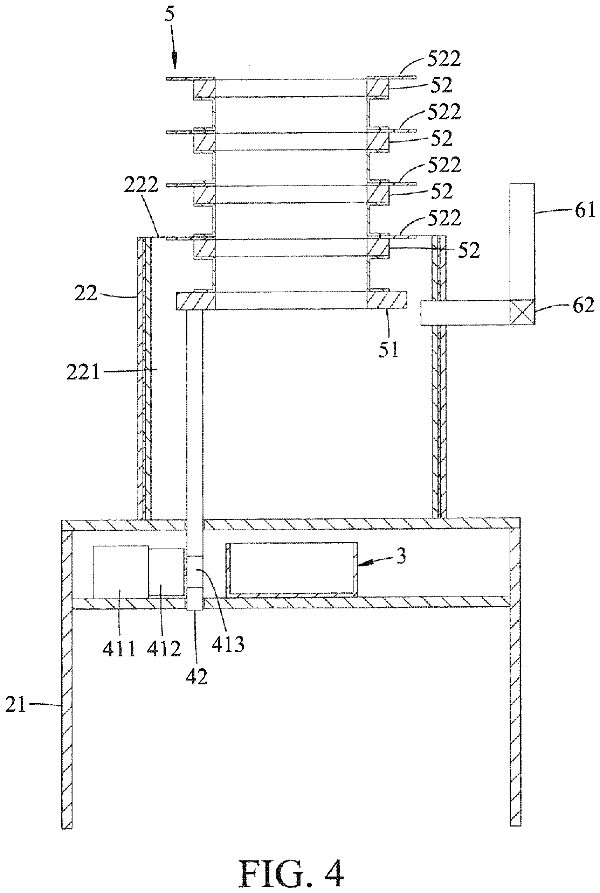

Referring further to Figure 4, the platform unit 5 is co-movably connected to the driven component 42 so as to move relative to the oven body 2 in the up-down direction between a first position and a second position. When the platform unit 5 is in the first position (as shown in Figure 1), the platform unit 5 is entirely within the inner space 221 and is adjacent to the foundation 21 and the heater 3. When the platform unit 5 is in the second position (as shown in Figure 4), the platform unit 5 is partially outside of the inner space 221 and is away from the foundation 21 and the heater 3. In some embodiments, the platform unit 5 in the second position may be completely outside of the inner space 221. In some embodiments, the platform unit 5 may also be driven by the motor 411 cooperating with a threaded rod to move in the up-down direction instead of being driven by the driven component 42 and the gear 413, but the disclosure is not limited to such.

The platform unit 5 includes a base 51 that is connected to the driven component 42, a plurality of platforms 52 that are spaced apart from the base 51 and from each other along the axis (L), and a plurality of connecting parts 53 that connect the base 51 and the platforms 52 together. To describe in further detail, one of the connecting parts 53 is connected between the base 51 and one of the platforms 52 that is adjacent to the base 51, and each of others of the connecting parts 53 is connected between adjacent two of the platforms 52 in a manner that the platforms 52 and the connecting parts 53 are arranged alternately.

The base 51 has a ring shape and surrounds the axis (L). Each of the platforms 52 includes a supporting ring 521 that surrounds the axis (L), and a plurality of plates 522 that are disposed on the supporting ring 521 and that are arranged around the axis (L). In this embodiment, when the platform unit 5 is in the second position, an upper surface of each of the plates 522 of a lowest one of the platforms 52 is outside of the inner space 221, and remaining ones of the platforms 52 are outside of the inner space 221, so as to facilitate a user in taking the pepper buns 9 that are disposed on the plates 522 of each of the platforms 52. In some embodiments, when the platform unit 5 is in the second position, the platforms 52 and the base 51 are both outside of the inner space 221 for the user to take the pepper buns 9 that are disposed on the plates 522 of each of the platforms 52.

The exhaust unit 6 is disposed on the oven body 2, and includes an exhaust pipe 61 and an exhaust fan 62. The exhaust pipe 61 is connected to the surrounding wall 22 and makes the inner space 221 in spatial communication with space outside of the surrounding wall 22. The exhaust fan 62 is disposed in the exhaust pipe 61 and is configured to discharge gas in the inner space 221 through the exhaust pipe 61.

The cover 7 is removably disposed on the surrounding wall 22, and includes a cover body 71 for closing the opening 222, and a handle 72 that is disposed on the cover body 71.

In summary, according to the disclosure, the driving unit 4 is capable of driving the platform unit 5 to move between the first position and the second position. When the user is about to place the pepper buns 9 into the oven, the platform unit 5 may be driven to rise to the second position as shown in Figure 4, as such, the user may place the pepper buns 9 onto the plates 522 of the platform unit 5. After the pepper buns 9 are placed onto the platform unit 5, the user may control the driving unit 4 to drive the platform unit 5 to move downward to the first position as shown in Figure 1, as such, the platforms 52 and the pepper buns 9 are heated inside the inner space 221. After the heating is completed, the platform unit 5 may be driven to rise to the second position again for the user to take out the pepper buns 9 from the platform unit 5. Since the pepper buns 9 are outside of the inner space 221 when the platform unit 5 is in the second position, the pepper buns 9 are more convenient for the user to take out, and a risk of the user getting burned is decreased.

Moreover, by setting the base 51 and the platforms 52 to have a ring shape, heat energy released by the heater 3 may be spread along the axis (L) through convection so that the pepper buns 9 disposed on each of the platforms 52 may be heated properly.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. An oven **characterized by**:
an oven body including a foundation, and a surrounding wall that is disposed on said foundation and that surrounds and defines an inner space;
a driving unit including a driving module that is disposed on said foundation, and a driven component that is to be driven by said driving module; and
a platform unit co-movably connected to said driven component so as to move relative to said oven body between a first position and a second position, wherein said platform unit in the first position is entirely within the inner space and adjacent to said foundation, and said platform unit in the second position is partially outside of the inner space and away from said foundation.

2. The oven as claimed in claim 1, wherein said surrounding wall surrounds an axis, and said platform unit includes a base that is connected to said driven component, a plurality of platforms that are spaced apart from said base and from each other in the axis, and a plurality of connecting parts that connect said base and said platforms together.

3. The oven as claimed in claim 2, wherein each of said platforms includes a supporting ring that surrounds the axis, and a plurality of plates that are disposed on said supporting ring and that are arranged around the axis.

4. The oven as claimed in any one of claims 2 and 3, wherein said base has a ring shape and surrounds the axis, and said oven further comprises a heater that is disposed on said oven body at a position on the axis and that is configured to heat the inner space.

5. The oven as claimed in any one of claims 1 to 4, wherein:
said driving module includes a motor that is disposed on said foundation, a reduction drive that is connected to and driven by said motor, and a gear that is connected to and driven by said reduction drive; and
said driven component is a rack that engages said gear and that is configured to be driven by said gear to move said platform unit between the first position and the second position.

6. The oven as claimed in any one of claims 1 to 5, further comprising an exhaust unit disposed on said oven body,
wherein said exhaust unit includes an exhaust pipe that is connected to said surrounding wall and that makes the inner space in spatial communication with space outside of said surrounding wall, and an exhaust fan that is disposed in said exhaust pipe and that is configured to discharge gas in the inner space through said exhaust pipe.

7. The oven as claimed in any one of claims 1 to 6, wherein the inner space has an opening opposite to said foundation, and said oven further comprises a cover removably disposed on said surrounding wall for closing the opening.

8. The oven as claimed in any one of claims 1 to 7, further comprising a heater disposed on said oven body for heating the inner space, wherein said heater is a brazier.

9. The oven as claimed in any one of claims 1 to 8, further comprising a heater disposed on said oven body for heating the inner space, wherein said heater is removably disposed on said oven body.

10. The oven as claimed in any one of claims 1 to 9, wherein said surrounding wall includes an inner layer, an outer layer, and an intermediate layer that is sandwiched in between said inner layer and said outer layer, wherein said inner layer and said outer layer are made of stainless steel, and said intermediate layer is made of thermal insulation cotton.
